# EUROPÄISCHE PATENTSCHRIFT

(11) **EP 4 054 788 B1**
(45) Veröffentlichungstag und Bekanntmachung des Hinweises auf die Patenterteilung: **17.01.2024**
(21) Anmeldenummer: 19802110.7
(22) Anmeldetag: 05.11.2019
(51) Int. Cl.: B23K 20/10, B23K 20/26, B23K 101/32

(54) **ULTRASCHALLSCHWEISSEINRICHTUNG MIT INTEGRIERTER KAMERAANORDNUNG**
ULTRASONIC WELDING DEVICE WITH INTEGRATED CAMERA ARRANGEMENT
DISPOSITIF DE SOUDAGE ULTRASONIQUE AVEC DISPOSITIF DE CAMÉRA INTÉGRÉ

(43) Veröffentlichungstag der Anmeldung: 14.09.2022
(73) Patentinhaber: Schunk Sonosystems GmbH, 35435 Wettenberg (DE)
(72) Erfinder: MÜLLER, Stefan, 35580 Wetzlar (DE); WAGENBACH, Rainer, 35799 Merenberg (DE); WERNER, Waldemar, 35447 Reiskirchen (DE); GÜNTHER, Daniel, 35428 Langgöns (DE); KOSECKI, Dariusz, 35444 Biebertal (DE); BECKER, Stephan, 35037 Marburg (DE); KOCH, Eugen, 35305 Grünberg (DE); HÄNISCH, Bernd, 24768 Rendsburg (DE)
(74) Vertreter: Qip Patentanwälte Dr. Kuehn & Partner mbB
(86) Internationale Anmeldenummer: PCT/EP2019/080249
(87) Internationale Veröffentlichungsnummer: WO 2021/089125

(56) Entgegenhaltungen:
- WO-A1-2019/082558
- DE-A1-102016 109 131
- DE-A1-102016 121 160
- DE-U1-212014 000 075
- JP-A- 2011 005 550
- US-A1- 2008 007 624
- US-A1- 2013 011 717
- US-A1- 2013 011 717
- US-A1- 2019 268 527

## Beschreibung

### GEBIET DER ERFINDUNG

Die vorliegende Erfindung betrifft eine Ultraschallschweißeinrichtung.

### HINTERGRUND DER ERFINDUNG

Für verschiedenste technische Anwendungen kann es notwendig sein, zwei Komponenten mechanisch fest und/oder elektrisch leitfähig miteinander zu verbinden. Beispielsweise kann es für verschiedene Einsatzzwecke erforderlich sein, Kabel bzw. deren Litzen mechanisch und elektrisch leitfähig miteinander zu verbinden. Hierdurch können beispielsweise Kabelstränge oder Kabelbäume gefertigt werden, mithilfe derer elektrische Verbraucher zum Beispiel innerhalb eines Fahrzeugs miteinander, mit einer Energiequelle und/oder mit einer Steuerung elektrisch verbunden werden können.

Um zwei elektrisch leitfähige Komponenten stoffschlüssig und somit mechanisch belastbar und elektrisch gut leitfähig miteinander zu verbinden, wurde das sogenannte Ultraschallschweißen entwickelt. Es ist eine spezielle Ausprägung des Reibschweißens, bei dem zu verschweißende Komponenten, die auch als Fügepartner oder Schweißgut bezeichnet werden, mit Oberflächen aneinander in Anlage gebracht und unter geringem Druck und hochfrequenten mechanischen Schwingungen gegeneinander bewegt werden. Die Schwingungen können hierbei mithilfe einer Sonotrode erzeugt werden, in der Ultraschallschwingungen mit Frequenzen von typischerweise 20 kHz bis 50 kHz erzeugt und auf wenigstens einen der Fügepartner übertragen werden. Durch plastisches Fließen können sich die Fügepartner dann oberflächennah ineinander verzahnen oder verhaken, ohne dass die Materialien der Fügepartner notwendigerweise schmelzen. Durch Ultraschallschweißen können Fügepartner daher schonend, schnell und wirtschaftlich miteinander verbunden werden.

Ultraschallschweißen kann insbesondere auch zum Verschweißen von metallischen Fügepartnern wie zum Beispiel Litzen von zwei oder mehreren zu verbindenden Kabeln oder wie zum Beispiel zwei oder mehr Einzeldrähten einer verschweißend zu verdichtenden Litze eines Kabels eingesetzt werden. Hierzu werden die Fügepartner im Allgemeinen in einen Aufnahmeraum einer Ultraschallschweißeinrichtung eingelegt. Der Aufnahmeraum ist dabei ein Volumen innerhalb der Ultraschallschweißeinrichtung, das von verschiedenen Komponenten wie beispielsweise einer Sonotrode, einem Amboss, einem Seitenschieber, einem Touchierelement oder ähnlichem von zwei Seiten her oder sogar von vier Seiten her rahmenartig umgeben wird, sodass darin aufgenommene Fügepartner darin während eines Schweißvorgangs positioniert werden können und möglichst nicht seitlich aus dem Aufnahmeraum entweichen können. Die in dem Aufnahmeraum aufgenommenen Fügepartner werden anschließend zwischen der Ultraschall-schwingenden Sonotrode und dem Amboss miteinander verschweißt.

Beim Ultraschallschweißen können verschiedene Bedingungen, welche hierin im Folgenden als Verschweißungsbedingungen bezeichnet werden, Einfluss auf die durch einen Ultraschallschweißvorgang erzeugten Verschweißungen von Fügepartnern haben. Beispielsweise können die Relativpositionierung der Fügepartner zu einander sowie auch die Positionierung der Fügepartner innerhalb des Aufnahmeraums während eines Ultraschallschweißvorgangs einen erheblichen Einfluss auf eine Qualität der erzeugten Verschweißung haben.

Insbesondere sollten Enden von als Fügepartner zu verschweißenden Litzen in dem Aufnahmeraum der Ultraschallschweißeinrichtung möglichst genau übereinander positioniert sein, sodass sie in etwa fluchtend miteinander zwischen der Sonotrode und dem Amboss aufgenommen werden und miteinander verschweißt werden können. Außerdem können Einlegefehler, bei denen Fügepartner an einer unvorteilhaften Position innerhalb des Aufnahmeraums eingelegt werden oder sogar falsche Fügepartner eingelegt werden, einen negativen Einfluss auf die erzeugte Verschweißung bzw. das damit erzeugte Produkt haben. Ferner können Verschmutzungen an den zum Schweißen eingesetzten Werkzeugen, insbesondere an der Sonotrode und/oder dem Amboss, oder Verschmutzungen an den zu verschweißenden Fügepartnern sich negativ auf die erzeugte Verschweißung auswirken. Ferner unterliegen die Werkzeuge von Ultraschallschweißeinrichtungen typischerweise einem Verschleiß, sodass sie von Zeit zu Zeit ausgewechselt werden müssen. Hierbei können Fehler auftreten und ungeeignete Werkzeuge in eine Ultraschallschweißeinrichtung eingesetzt werden, wodurch wiederum die damit erzeugten Verschweißungen mangelbehaftet sein können.

Herkömmlich musste oft ein Bediener einer Ultraschallschweißeinrichtung darauf achten, dass die Verschweißungsbedingungen in der Ultraschallschweißeinrichtung sowie die Fügepartner bestimmten Vorgaben genügen. Beispielsweise musste der Bediener zu verschweißende Kabel mit ihren Litzen korrekt innerhalb des Aufnahmeraums der Ultraschallschweißeinrichtung positionieren. Hierzu musste der Bediener regelmäßig speziell geschult werden und die Ultraschallschweißeinrichtung stets hoch konzentriert bedienen. Insbesondere war es meist nötig, dass der Bediener beispielsweise nach einem Einlegen der Fügepartner in den Aufnahmeraum deren korrekte Positionierung überprüfte, beispielsweise durch visuelle Kontrolle, bevor der Schweißvorgang ausgelöst wurde. Der Bediener konnte bei diesen Aufgaben durch in der Ultraschallschweißeinrichtung vorgesehene feste Anschläge, Positionierhilfen, wie zum Beispiel auf der Sonotrode vorgesehene Markierungen, und Ähnliches unterstützt werden.

Ferner konnte es zu den Aufgaben eines Bedieners gehören, nach einer Durchführung eines Schweißvorgangs fehlerhafte Verschweißungen zu erkennen. Schweißfehler konnten sich dabei beispielsweise in einer Schlaufenbildung, abstehenden Adern, Beschädigungen, Positionsverschiebungen von Leitungen und/oder anderen von einer Vorgabe abweichenden Schweißergebnissen äußern.

US 2013/0011717 A1, welche die Basis für den Oberbegriff des Anspruchs 1 bildet, beschreibt eine Batterie und ein Ultraschallschweißsystem zur Verwendung bei deren Herstellung.

DE 10 2016 109 131 A1 beschreibt ein Verfahren zu dreidimensionalen Erfassung eines Objekts.

US 2010/0326962 A1 beschreibt ein Schweißsteuersystem.

DE 21 02014 000 075 U1 beschreibt eine Kamera- und Drahtzufuhrlösung für ein Orbitalschweißsystem.

DE 10 2016 121 160 A1 beschreibt eine Lötanlage.

### ZUSAMMENFASSUNG DER ERFINDUNG UND VORTEILHAFTER AUSFÜHRUNGSFORMEN

Es kann ein Bedarf an einer Ultraschallschweißeinrichtung zum Verschweißen wenigstens zweier Fügepartner bestehen, welche einfach zu bedienen ist, welche eine Überwachung von Verschweißungsbedingungen unterstützt und/oder welche eine hohe und vorzugsweise über viele Schweißvorgänge gleichbleibende Qualität von erzeugten Schweißverbindungen ermöglicht.

Einem solchen Bedarf kann mit dem Gegenstand des unabhängigen Anspruchs entsprochen werden. Vorteilhafte Ausführungsformen sind in den abhängigen Ansprüchen sowie der nachfolgenden Beschreibung definiert.

Gemäß einem Aspekt der vorliegenden Erfindung wird eine Ultraschallschweißeinrichtung beschrieben, welche eine Sonotrode, einen Amboss, einen Aufnahmeraum, in welchem zu verschweißende Fügepartner aufzunehmen sind und der an gegenüberliegenden Seiten von der Sonotrode einerseits und von dem Amboss andererseits begrenzt ist, sowie eine Kameraanordnung mit wenigstens einer Kamera, welche in die Ultraschallschweißeinrichtung integriert ist, aufweist. Die Kameraanordnung ist hierbei dazu konfiguriert, zur optischen Überwachung von Verschweißungsbedingungen, welche Verschweißungen der Fügepartner beeinflussen, Bilder von zumindest einem Teilbereich des Aufnahmeraums aufzunehmen.

Im Aufnahmeraum der Ultraschallschweißeinrichtung sollen vor und während des Schweißvorgangs die zu verschweißenden Fügepartner aufgenommen werden. Der Aufnahmeraum ist dabei typischerweise zumindest von zwei Seiten her, oft sogar von vier Seiten her begrenzt, sodass die Fügepartner lediglich in einem begrenzten Aufnahmevolumen Platz finden. An zwei gegenüberliegenden Seiten, d.h. beispielsweise oben und unten, kann der Aufnahmeraum einerseits von einer Oberfläche der Sonotrode und andererseits von einer Oberfläche des Amboss begrenzt sein. Die Sonotrode und/oder der Amboss können dabei verlagerbar sein, sodass diese beiden Komponenten relativ zueinander aufeinander zu bzw. voneinander wegbewegt werden können und auf diese Weise der Aufnahmeraum in einer ersten Richtung, d.h. beispielsweise in senkrechter Richtung, verkleinert bzw. vergrößert werden kann. An zwei weiteren gegenüberliegenden Seiten, welche quer, vorzugsweise senkrecht, zu den zuvor genannten beiden Seiten verlaufen, d.h. beispielsweise links und rechts, kann der Aufnahmeraum ergänzend einerseits von einer Oberfläche eines Touchierelements und andererseits von einer Oberfläche eines Seitenschiebers begrenzt werden. Das Touchierelement und/oder der Seitenschieber können dabei wiederum verlagerbar sein, sodass diese beiden Komponenten relativ zueinander aufeinander zu bzw. voneinander wegbewegt werden können und auf diese Weise der Aufnahmeraum in einer zu der oben genannten ersten Richtung senkrecht verlaufenden zweiten Richtung verkleinert bzw. vergrößert werden kann. Die Oberflächen der genannten Komponenten können den Aufnahmeraum dabei wie ein Rahmen, insbesondere ein viereckiger Rahmen, umgeben. An der nicht von den genannten Komponenten begrenzten fünften oder sechsten Seite können die Fügepartner in einer Einschubrichtung in den rahmenartig umgebenen Aufnahmeraum eingebracht bzw. eingeschoben werden.

Die Formulierung "den Aufnahmeraum an einer Seite begrenzen" kann dabei dahingehend verstanden werden, dass die jeweilige Oberfläche der jeweils genannten Komponente dazu führt, dass sich die Fügepartner nicht über die von dieser Oberfläche bewirkte Begrenzung hinausbewegen können. Hierzu kann die jeweilige Oberfläche den Aufnahmeraum an der jeweiligen Seite komplett abdecken. Alternativ kann jedoch auch eine lediglich teilweise Abdeckung des Aufnahmeraums an der jeweiligen Seite genügen, solange sichergestellt bleibt, dass die Fügepartner innerhalb des Aufnahmeraums gehalten werden.

Zu den beim Ultraschallschweißen möglichst einzuhaltenden Verschweißungsbedingungen zählt dabei unter anderem, dass die Fügepartner korrekt relativ zueinander sowie an einer vorteilhaften Position in Relation zu der Sonotrode und dem Amboss in dem Aufnahmeraum positioniert werden, bevor der Schweißvorgang ausgelöst wird. Da der Aufnahmeraum der Ultraschallschweißeinrichtung verhältnismäßig klein und oft schwierig einsehbar ist, kann die Einhaltung der Verschweißungsbedingungen anspruchsvoll sein.

Bisher war hierfür meist Geschick des Bedieners der Ultraschallschweißeinrichtung sowie visuelle Überwachung durch diesen Bediener notwendig. Dies konnte je nach Qualifikation des Bedieners und/oder dessen Konzentration zu Schwankungen bei der Qualität der erzeugten verschweißten Produkte führen.

Insbesondere um den Bediener bei der Überwachung von Verschweißungsbedingungen zu unterstützen, wird vorgeschlagen, die Ultraschallschweißeinrichtung ergänzend mit einer Kameraanordnung auszustatten.

Die Kameraanordnung soll zumindest eine Kamera aufweisen. Diese Kamera soll mitsamt anderen Komponenten der Kameraanordnung in die Ultraschallschweißeinrichtung integriert sein, d.h. Teil der Ultraschallschweißeinrichtung sein. Hierzu kann die Kameraanordnung beispielsweise fest an anderen Komponenten der Ultraschallschweißeinrichtung angebracht sein. Außerdem kann die Kameraanordnung mit anderen Komponenten der Ultraschallschweißeinrichtung funktional zusammenwirken. Beispielsweise kann die Kamera von einer elektrischen Energieversorgung, die auch andere Komponenten der Ultraschallschweißeinrichtung versorgt, mit elektrischer Energie versorgt werden. Außerdem kann die Kamera möglicherweise von ihr erzeugte Daten an andere Komponenten der Ultraschallschweißeinrichtung wie z.B. eine Steuerung der Ultraschallschweißeinrichtung weiterleiten.

Die Kameraanordnung soll dazu konfiguriert sein, Bilder von zumindest einem Teilbereich des Aufnahmeraums aufzunehmen. Die Bilder sollen dabei Bildeigenschaften wie beispielsweise eine Auflösung, eine Tiefenschärfe, eine Anzahl von Grautönen oder Farbtönen, etc. aufweisen, die es ermöglichen, aufgrund der Bilder Verschweißungsbedingungen, welche die Qualität von Verschweißungen der Fügepartner beeinflussen können, überwachen zu können. Beispielsweise kann die Kamera für eine Bildauflösung von wenigstens 64x64 Pixeln, vorzugsweise wenigstens 256x256 Pixeln oder sogar im Bereich von einem oder einigen Megapixeln, ausgelegt sein. Hierfür kann die Kamera einen flächigen Bildsensor wie beispielsweise einen CCD-Sensor oder einen CMOS-Sensor aufweisen. Für spezielle Anwendungen kann es eventuell genügen, die Kamera mit einem linienartigen Bildsensor oder sogar nur mit einem punktförmigen Lichtsensor auszustatten und den als Bild aufzunehmenden Teilbereich damit abzuscannen.

Der Teilbereich des Aufnahmeraums, von dem die Kameraanordnung Bilder aufnehmen soll, kann sich beispielsweise angrenzend an die Sonotrode befinden. Ein dem aufzunehmenden Teilbereich entsprechendes Sichtfeld der Kameraanordnung, innerhalb dessen mit der Kamera ausreichend scharfe und/oder ausreichend hoch aufgelöste Bilder aufgenommen werden können, kann dabei einem Volumen angrenzend an eine Gesamtfläche einer zu dem Aufnahmeraum hin gerichteten Oberfläche der Sonotrode oder Teilvolumina hiervon entsprechen. Insbesondere sollte der abzubildende Teilbereich des Aufnahmeraums diejenigen Volumenanteile umfassen, in denen typischerweise die Fügepartner aufgenommen sind bzw. an denen beispielsweise für eine Qualität der Verschweißungen relevante Grenzflächen zwischen den Fügepartnern typischerweise angeordnet sind.

Die von der Kameraanordnung aufgenommenen Bilder können im einfachsten Fall auf einer Anzeige oder einem Display dargestellt werden. Die Bilder können dabei als Standbild oder als mehrere zeitlich aufeinanderfolgende Bilder, beispielsweise als video-artige Bildsequenz, dargestellt werden. Dementsprechend braucht der Bediener der Ultraschallschweißeinrichtung nicht mehr mühsam in den Aufnahmeraum hineinzuschauen, sondern kann die dortigen Verhältnisse visuell anhand der aufgenommenen Bilder überwachen. Eventuell können einzelne Bildausschnitte vergrößert dargestellt werden.

Ergänzend oder alternativ können die Bilder, wie weiter unten detaillierter ausgeführt, auch genutzt werden, um weitere Funktionalitäten für die Ultraschallschweißeinrichtung, insbesondere zur Überwachung von Verschweißungsbedingungen in dieser, zu implementieren.

Gemäß einer Ausführungsform kann die Kameraanordnung außerhalb des Aufnahmeraums angeordnet sein und dazu konfiguriert sein, die Bilder von dem Teilbereich des Aufnahmeraums von einer Seite her in Relation zu einer den Aufnahmeraum begrenzenden Oberfläche der Sonotrode aufzunehmen.

Anders ausgedrückt ist es bevorzugt, die Kameraanordnung zwar als integralen Bestandteil der Ultraschallschweißeinrichtung auszubilden, sie aber nicht innerhalb des von der Sonotrode und dem Amboss begrenzten Aufnahmeraums, sondern außerhalb hiervon, anzuordnen. Dementsprechend können sich die Sonotrode und der Amboss unbeeinflusst von der Kameraanordnung relativ zueinander bewegen lassen.

Um allerdings dennoch in den Aufnahmeraum blicken zu können und Bilder von dem Teilbereich innerhalb des Aufnahmeraums aufnehmen zu können, sollten diese Bilder von einer Seite her, beispielsweise unter einem schrägen Winkel, aufgenommen werden. Der Winkel kann je nach Anwendungsfall unterschiedlich gewählt sein. Der Winkel bezieht sich dabei auf die zu dem Aufnahmeraum gerichtete Oberfläche der Sonotrode und kann beispielsweise zwischen einem steilen Winkel fast senkrecht (beispielsweise zwischen 70° und 85°) über schräg von der Seite (beispielsweise zwischen 0° und 70°) bis hin zu schräg von unten (beispielsweise zwischen -30° und 0°) betragen. Der Winkel könnte auch auf eine Verbindungsrichtung zwischen der Sonotrode und dem Amboss bezogen werden und dann beispielsweise zwischen 5° und 120°, vorzugsweise zwischen 10° und 70° betragen. Insbesondere kann die Kamera der Kameraanordnung bezogen auf diese Verbindungsrichtung schräg neben dem Aufnahmeraum angeordnet sein, d.h. bezogen auf den Aufnahmeraum seitlich versetzt in einer Richtung, in der die Fügepartner in den Aufnahmeraum eingeschoben werden können, angeordnet sein, um dann schräg in den Aufnahmeraum blicken zu können. Dementsprechend kann die Kamera, ohne von dem Amboss oder der Sonotrode behindert zu werden, Bilder von dem gewünschten Teil des Aufnahmeraums aufnehmen.

Gemäß einer Ausführungsform kann die Ultraschallschweißeinrichtung ferner eine Lichtquelle aufweisen, welche dazu konfiguriert ist, den Teilbereich des Aufnahmeraums, in dem von der Kameraanordnung die Bilder aufzunehmen sind, zu beleuchten.

Mit einer solchen Lichtquelle kann der abzubildende Teilbereich des Aufnahmeraums, der sich meist weit im Innern der Ultraschallschweißeinrichtung befindet und von umliegenden Komponenten weitgehend gegen Umgebungslicht abgeschattet wird, ausgeleuchtet werden. Aufgrund von somit stark verbesserten Lichtverhältnissen kann eine Qualität der von der Kameraanordnung aufgenommenen Bilder signifikant erhöht werden. Außerdem kann ein Einfluss von in den Aufnahmeraum einfallendem Umgebungslicht, welches je nach Intensität und Art des Umgebungslichts die aufgenommenen Bilder sehr unterschiedlich beeinflussen kann, stark reduziert werden, sodass die Bilder weitgehend unabhängig von dem Umgebungslicht mit hoher Qualität aufgenommen werden können.

Die Lichtquelle kann ein oder mehrere Leuchtmittel beispielsweise in Form von LEDs, Glühlämpchen, lumineszierenden Elementen oder ähnlichem umfassen, wobei der Einsatz von LEDs aufgrund von deren geringer Baugröße, geringer Wärmeentwicklung und hoher Langlebigkeit bevorzugt sein kann.

Gemäß einer konkretisierten Ausführungsform kann die Lichtquelle mehrere verteilt angeordnete Leuchtmittel aufweisen.

Beispielsweise kann die Lichtquelle zwei, drei, vier, fünf oder mehr einzelne Leuchtmittel aufweisen, die beabstandet zueinander angeordnet sind. Dabei kann es vorteilhaft sein, die Leuchtmittel entlang einer geraden oder bogenförmigen Linie hintereinander anzuordnen, wobei die Linie vorzugsweise parallel zu der Einschubrichtung, in der die Fügepartner in den Aufnahmeraum eingeschoben werden und in der sich typischerweise auch die Längsrichtung der länglichen Fügepartner erstreckt, ist. Vorzugsweise können die Leuchtmittel äquidistant voneinander angeordnet sein, sie können aber auch in variierenden Abständen zueinander angeordnet sein. Außerdem brauchen die Leuchtmittel nicht alle in einer gleichen Ebene angeordnet sein. Stattdessen können die Leuchtmittel zum Beispiel entlang eines Bogens, insbesondere eines Kreisbogens, angeordnet sein. Vorzugsweise ist jedes der Leuchtmittel dabei derart angeordnet, dass das von ihm emittierte Licht zu einem signifikanten Anteil, vorzugsweise zu einem überwiegenden Anteil, in den Aufnahmeraum und insbesondere auf den abzubildenden Teilbereich fällt.

Indem die gesamte, in den Aufnahmeraum einzustrahlende Lichtintensität nicht von einem einzigen Leuchtmittel, sondern von einer Mehrzahl verteilt angeordneter Leuchtmittel, erzeugt wird, kann unter anderem eine homogenere Ausleuchtung in dem Aufnahmeraum und damit eine bessere Qualität der aufgenommenen Bilder erreicht werden.

Gemäß einer Ausführungsform kann die Lichtquelle dazu konfiguriert sein, den Teilbereich des Aufnahmeraums überwiegend mit diffusem Licht zu beleuchten.

Anders ausgedrückt können das bzw. die Leuchtmittel der Lichtquelle derart ausgewählt sein und/oder deren Lichtemission durch ergänzende Maßnahmen derart beeinflusst sein, dass sie Licht nicht in gerichteter, insbesondere nicht in fokussierter Weise auf den auszuleuchten Teilbereich des Aufnahmeraums richten. Stattdessen soll das den Teilbereich erreichende Licht möglichst diffus sein, d.h. aus verschiedenen Richtungen den Teilbereich ausleuchten.

Hierdurch kann unter anderem erreicht werden, dass der Teilbereich sehr homogen ausgeleuchtet wird, wodurch die Qualität der aufgenommenen Bilder gesteigert werden kann. Außerdem können durch eine diffuse Ausleuchtung starke lokale Reflexionen, wie sie ansonsten beispielsweise bei Auftreffen des Lichts auf den Aufnahmeraum begrenzende metallische Oberflächen angrenzender Komponenten auftreten könnten, vermindern.

Eine diffuse Ausleuchtung des Aufnahmeraums kann beispielsweise erreicht werden, indem die Leuchtmittel den Aufnahmeraum nicht direkt beleuchten, sondern zwischen den Leuchtmitteln und dem Aufnahmeraum eine Licht-streuende Komponente zwischengelagert wird. Eine solche Licht-streuende Komponente kann aus einem transparenten oder semitransparenten Material bestehen, sodass in ihr kein oder nur wenig Licht absorbiert wird. Allerdings können beispielsweise in dem Material aufgenommene, streuende Partikel und/oder eine an einer Oberfläche des Materials vorgesehene raue Textur dazu führen, dass durch das Material hindurchgeführtes Licht aus seiner ursprünglichen Richtung heraus diffus gestreut wird. Die Leuchtmittel können in eine solche Licht-streuende Komponente integriert sein oder bezogen auf den Aufnahmeraum auf einer entgegengesetzten Seite einer solchen Licht-streuenden Komponente angeordnet sein.

Gemäß einer weiteren konkretisierten Ausführungsform kann die Lichtquelle dazu konfiguriert sein, den Teilbereich des Aufnahmeraums wählbar mit Licht unterschiedlicher Farben zu beleuchten.

Hierzu kann die Lichtquelle beispielsweise ein oder mehrere Leuchtmittel aufweisen, die selektiv zur Emission von Licht unterschiedlicher Farben angesteuert werden können, d.h. farblich durchstimmbar sind. Beispielsweise können als Leuchtmittel durchstimmbare LEDs eingesetzt werden. Alternativ können in der Lichtquelle mehrere Leuchtmittel vorgesehen sein, wobei jedes Leuchtmittel Licht einer Farbe emittieren kann und sich die Lichtfarben der Leuchtmittel unterscheiden, sodass durch selektives Ein- und Ausschalten von Leuchtmitteln die Lichtfarbe der Lichtquelle gewählt werden kann. Beispielsweise können in der Lichtquelle mehrere LEDs vorgesehen sein, welche sich hinsichtlich ihrer emittierten Lichtfarbe unterscheiden.

Die Wählbarkeit der Lichtfarbe kann dahingehend vorteilhaft sein, dass zum Beispiel manche der zu beobachtenden Verschweißungsbedingungen bei Verwendung einer anderen Lichtfarbe auf aufgenommenen Bildern besser zu erkennen sind als andere Verschweißungsbedingungen. Beispielsweise können Adern von zu verschweißenden Litzen besser mit Licht (beispielsweise rötlichem Licht) abgebildet werden, dessen Spektrum sich von Licht unterscheidet, mit dem beispielsweise Materialien oder Strukturen von anderen innerhalb der Ultraschallschweißeinrichtung angeordneten Komponenten vorteilhaft abgebildet werden können.

Gemäß einer Ausführungsform kann die Lichtquelle dazu konfiguriert sein, den Teilbereich des Aufnahmeraums mit einem Lichtmuster zu beleuchten.

Anders ausgedrückt kann die Lichtquelle dazu ausgestaltet sein, den abzubildenden Teilbereich nicht völlig homogen auszuleuchten, sondern diesen mit einem Lichtmuster zu beleuchten, bei dem sich auf benachbarte Regionen auftreffendes Licht lokal hinsichtlich seiner Lichtintensität und/oder seines Spektrums unterscheidet. Mit anderen Worten kann das Lichtmuster benachbarte hellere und dunkler Regionen und/oder benachbarte Regionen unterschiedlicher Farben aufweisen. Die unterschiedlich beleuchteten Regionen des Lichtmusters können sehr eng benachbart sein und Dimensionen aufweisen, die deutlich kleiner sind als die Abmessungen des abzubildenden Teilbereichs, sodass der Teilbereich mit einer Vielzahl solcher Lichtmuster-Regionen beleuchtet wird. Insbesondere kann eine Anzahl von Lichtmuster-Regionen deutlich größer sein als eine Anzahl von Leuchtmitteln in der Lichtquelle. Das Lichtmuster kann regelmäßig sein, d.h. aus sich periodisch wiederholenden Teilmustern zusammengesetzt sein. Das Lichtmuster kann aus einer Vielzahl parallel verlaufender linienartiger Regionen bestehen und somit als Streifenmuster bezeichnet werden. Alternativ kann das Lichtmuster auch andere, vorzugsweise regelmäßige Anordnungen von Lichtmuster-Regionen aufweisen.

Das Lichtmuster kann beispielsweise erzeugt werden, indem von einer Lichtquelle kommendes Licht beispielsweise durch eine zusätzliche optische Komponente geleitet wird, von der das Licht dem Lichtmuster entsprechend lokal unterschiedlich absorbiert und/oder lokal unterschiedlich fokussiert wird. Beispielsweise kann die hierzu eingesetzte optische Komponente zwischen der Lichtquelle und dem zu beleuchtenden Teilbereich angeordnet sein. Die optische Komponente kann dabei ein zu dem zu erzeugenden Lichtmuster komplementäres Muster aus hellen und dunklen Bereichen bzw. unterschiedlich gefärbten Bereichen aufweisen. Alternativ kann die optische Komponente lokal entsprechend dem zu erzeugenden Lichtmuster unterschiedliche Regionen mit verschiedenen Schichtdicken und/oder verschiedenen Brechungsindices aufweisen, sodass durchtretendes Licht lokal variierend gebrochen bzw. fokussiert wird und somit das Lichtmuster erzeugt wird.

Durch eine Beleuchtung des Teilbereichs mit einem Lichtmuster können insbesondere räumliche Strukturen innerhalb des abzubildenden Teilbereichs in den aufgenommenen Bildern besser erkennbar bzw. besser auswertbar sein. Beispielsweise können durch Beleuchtung mit einem Streifenmuster Strukturen von innerhalb des Aufnahmeraums aufgenommenen Fügepartnern besser erkannt werden, insbesondere wenn sich diese Strukturen in einer Blickrichtung einer Kamera nicht lateral nebeneinander, sondern schräg übereinander befinden. Anders ausgedrückt können durch eine Beleuchtung mit dem Lichtmuster Höhenkonturen innerhalb des beobachteten Teilbereichs des Aufnahmeraums besser erkannt werden.

Gemäß einer Ausführungsform kann das Kamerasystem eine zweite Kamera aufweisen, welche beabstandet zu der bereits genannten Kamera, welche nachfolgend als erste Kamera bezeichnet wird, des Kamerasystems angeordnet ist.

Das Vorsehen einer zweiten Kamera in dem Kamerasystem kann verschiedene Vorteile bringen. Beispielsweise kann im einfachsten Fall zumindest eine Redundanz bei der Bildaufnahme erreicht werden, sodass zum Beispiel bei Ausfall einer Kamera weiterhin Bilder mit der anderen Kamera aufgenommen werden können. Für eine praktische Anwendung wichtiger ist jedoch meist der Aspekt, dass dadurch, dass die beiden Kameras beabstandet zueinander angeordnet sind, ferner erreicht werden kann, dass der abzubildende Teilbereich des Aufnahmeraums mit den verschiedenen Kameras aus unterschiedlichen Richtungen beobachtet werden kann, wodurch die zu überwachenden Verschweißungsbedingungen besser erkannt werden können. Außerdem kann ein Beobachten aus verschiedenen Blickwinkeln in verhältnismäßig einfacher Weise ermöglichen, räumliche Strukturen innerhalb des abzubildenden Teilbereichs besser erkennen zu können. Insbesondere können die von den beiden Kameras aufgenommenen Bilder beispielsweise stereoskopisch ausgewertet werden, um räumliche Strukturen ähnlich wie bei einer dreidimensionalen Aufnahme erkennen zu können.

Die beiden in dem Kamerasystem eingesetzten Kameras können hinsichtlich ihrer Bildaufnahmeeigenschaften identisch sein, um eine Auswertung der Bilder beider Kameras und insbesondere einen Vergleich der Bilder einfacher zu gestalten. Alternativ können auch zwei Kameras eingesetzt werden, die sich hinsichtlich ihrer Bildaufnahmeeigenschaften gezielt unterscheiden, beispielsweise um verschiedenartige Verschweißungsbedingungen auf unterschiedliche Weise optisch überwachen zu können.

Gemäß einer Ausführungsform können die erste und die zweite Kamera entlang der Einschubrichtung, in der die Fügepartner in den Aufnahmeraum einzubringen sind, an gegenüberliegenden Seiten des Aufnahmeraums angeordnet sein und dazu konfiguriert sein, Bilder von dem Teilbereich des Aufnahmeraums unter verschiedenen schrägen Winkeln in Relation zu einer den Aufnahmeraum begrenzenden Oberfläche der Sonotrode aufzunehmen.

Anders ausgedrückt kann eine der Kameras in der Einschubrichtung gesehen schräg vor dem Aufnahmeraum und die andere Kamera schräg hinter dem Aufnahmeraum angeordnet sein. Dementsprechend können die beiden Kameras jeweils unter schrägen Winkeln von vorne bzw. von hinten in den Aufnahmeraum blicken und Bilder von dem zu beobachtenden Teilbereich aufnehmen. Dabei können die Kameras innerhalb einer gemeinsamen Ebene, die sich parallel zu der Einschubrichtung erstreckt, angeordnet sein. Alternativ können verschiedene Kameras aber auch in verschiedenen Ebenen parallel zu der Einschubrichtung angeordnet sein.

Eine solche Anordnung der beiden Kameras kann insbesondere dann vorteilhaft sein, wenn die Ultraschallschweißeinrichtung mit sogenannten verlagerbaren Litzenendanschlägen ausgestattet ist. Ein Litzenendanschlag kann als verlagerbares Bauteil verstanden werden, mit dem eine Öffnung, durch die Fügepartner normalerweise in den Aufnahmeraum eingelegt werden können, an einer Seite des Aufnahmeraums verschlossen werden kann, sodass Fügepartner nur von der anderen Seite des Aufnahmeraums in den Aufnahmeraum eingeführt werden können und an dem Litzenendanschlag stirnseitig anstoßend ausgerichtet werden können. Der Litzenendanschlag dient somit dazu, die Fügepartner entlang ihrer Einschubrichtung relativ zueinander korrekt zu positionieren. Vorteilhafterweise können Litzenendanschläge an beiden gegenüberliegenden Seiten des Aufnahmeraums vorgesehen sein, um diesen selektiv begrenzen zu können und somit als mechanischer Anschlag für Fügepartner, die von der einen Seite oder von der gegenüberliegenden Seite in den Aufnahmeraum eingelegt werden, dienen zu können.

Allerdings kann eine Kamera, wenn der Litzenendanschlag die Öffnung zu dem Aufnahmeraum an ihrer Seite blockiert, keine Bilder mehr von dem zu beobachtenden Teilbereich des Aufnahmeraums aufnehmen. Dementsprechend kann es vorteilhaft sein, eine zweite Kamera zur Verfügung zu stellen, die an einer gegenüberliegenden Seite bezogen auf den Aufnahmeraum angeordnet ist und somit von der gegenüberliegenden Seite her in den Aufnahmeraum blicken kann, ohne von dem Litzenendanschlag behindert zu werden.

Gemäß einer weiteren Ausführungsform weist die Kameraanordnung ferner eine Bildauswerteeinrichtung auf, welche dazu konfiguriert ist, mit der Kameraanordnung aufgenommene Bilder auszuwerten, um Daten zu erzeugen, mithilfe derer die Verschweißungsbedingungen zu bewerten sind.

Anders ausgedrückt können die von der Kameraanordnung aufgenommenen Bilder vorzugsweise nicht lediglich unverändert beispielsweise auf einem Bildschirm dargestellt werden, um sie dem Bediener der Ultraschallschweißeinrichtung darzustellen, sondern die Bilder können weiter ausgewertet werden, um daraus beispielsweise ergänzende Daten zu extrahieren, die für den Bediener allein durch Betrachten der Bilder nicht oder schwierig erkennbar wären und anhand derer zusätzliche Informationen über die zu beobachtenden Verschweißungsbedingungen erhältlich sind.

Hierzu kann die Bildauswerteeinrichtung beispielsweise eine Bildanalyse durchführen. Bei der Bildanalyse können beispielsweise bestimmte typische Strukturen in Bildern erkannt werden, die mit den Verschweißungsbedingungen zusammenhängen.

Beispielsweise kann durch Bildanalyse erkannt werden, ob Fügepartner korrekt in dem Aufnahmeraum positioniert wurden, indem z.B. Kanten der Fügepartner und/oder Kanten von Komponenten der Ultraschallschweißeinrichtung erkannt werden und deren Relativpositionierung zueinander analysiert wird.

Die Bildauswerteeinrichtung kann über einen Prozessor und eventuell über Datenspeicher verfügen, sodass Bilddaten von der Kameraanordnung eingelesen, möglicherweise zwischengespeichert und dann von dem Prozessor verarbeitet werden können. Die Bildauswerteeinrichtung kann dabei von einer Software gesteuert werden. Die Bildauswerteeinrichtung kann zum Auswerten der Bilder beispielsweise typische Strukturen, Muster, farbige Bereiche oder Ähnliches in den Bildern erkennen und z.B. durch Vergleich mit zuvor ermittelten Referenzen daraus Informationen über die zu beobachtenden Verschweißungsbedingungen ableiten.

Die durch die Auswertung der Bilder gewonnenen Daten können beispielsweise genutzt werden, um einem Bediener zusätzliche Informationen zur Verfügung zu stellen, die ihn beim Überwachen der Verschweißungsbedingungen unterstützen können. Alternativ oder ergänzend können die gewonnenen Daten auch in der Ultraschallschweißeinrichtung selbst verwendet zu werden, beispielsweise um einen durchzuführenden Schweißvorgang geeignet zu beeinflussen und/oder eine Positionierung von Fügepartnern aktiv zu beeinflussen. Eventuell können die Daten auch an externe Einrichtungen wie beispielsweise ein Greifersystem, einen Roboter oder ähnliches übermittelt werden, diese in die Lage zu versetzen, die Ultraschallschweißeinrichtung geeignet zu betätigen und/oder beispielsweise Fügepartner geeignet in den Aufnahmeraum einzuführen.

Gemäß einer konkretisierten Ausführungsform kann die Bildauswerteeinrichtung dazu konfiguriert sein, die mit der Kameraanordnung aufgenommenen Bilder derart räumlich auszuwerten, dass dabei erzeugte Daten in drei Dimensionen ortsabhängige Informationen über die Verschweißungsbedingungen beinhalten.

Mit anderen Worten kann die Bildauswerteeinrichtung die aufgenommenen Bilder vorzugsweise derart analysieren, dass darin nicht nur zweidimensionale Strukturen erkannt und zum Ableiten von Informationen über die Verschweißungsbedingungen genutzt werden, sondern zusätzlich auch Tiefeninformationen aus den aufgenommenen Bildern extrahiert werden, sodass Informationen über die Verschweißungsbedingungen dreidimensional ermittelt werden können.

Hierzu können Bilder von dem Teilbereich des Aufnahmeraums beispielsweise aus verschiedenen Blickwinkeln mit verschiedenen Kameras aufgenommen werden und zum Beispiel durch stereoskopische Bildverarbeitung dann räumliche Informationen aus den Bildern abgeleitet werden. Alternativ oder ergänzend können in dem Teilbereich befindliche Strukturen mit einem Lichtmuster beleuchtet werden, um dann durch geeignete Bildanalyse aus den entsprechend gemusterten Bildern räumliche Informationen ableiten zu können. Die dadurch in drei Dimensionen ortsabhängige Informationen über die Verschweißungsbedingungen können wertvolle Zusatzinformationen enthalten, anhand derer beispielsweise ein Bediener erkennen kann, ob angestrebte Verschweißungsbedingungen tatsächlich realisiert sind.

Erfindungsgemäß ist die Kameraanordnung modular aus mehreren Komponenten, welche bedarfsgerecht austauschbar sind, zusammengesetzt.

Anders ausgedrückt kann die Kameraanordnung nicht als in sich geschlossene Einheit ausgestaltet sein, die allenfalls als Ganzes ausgetauscht werden kann. Stattdessen kann es vorteilhaft sein, die Kameraanordnung aus verschiedenen Komponenten modular zusammenzusetzen. Einige der Komponenten können dabei für verschiedene Einsatzzwecke eingesetzt werden, wohingegen andere der Komponenten speziell für einen Einsatzzweck angepasst sein können und für eine Verwendung der Kameraanordnung für einen anderen Einsatzzweck gegen andere Komponenten ausgetauscht werden sollten.

Beispielsweise kann eine mechanische Halterung bzw. ein Gehäuse der Kameraanordnung für verschiedene Einsatzzwecke einsetzbar sein. Die Lichtquelle und insbesondere deren Leuchtmittel und/oder ein zum Erzeugen von diffusem Licht einzusetzender Streukörper können hingegen für einen bestimmten Einsatzzweck optimiert sein, beispielsweise um bestimmte Beleuchtungsverhältnisse in dem Aufnahmeraum zu schaffen. Letztgenannte Komponenten können modular gegen andere Komponenten ausgetauscht werden, um beispielsweise andere Beleuchtungsverhältnisse in dem Aufnahmeraum zu schaffen. Der modulare Aufbau der Kameraanordnung ermöglicht somit ein einfaches Anpassen ihrer Eigenschaften an verschiedene Einsatzzwecke. Außerdem können beispielsweise Komponenten, die einem erhöhten Verschleiß unterliegen, einfach modular ausgetauscht werden.

Gemäß einer Ausführungsform können Komponenten der Ultraschallschweißeinrichtung austauschbar sein. Dabei kann jede der Komponenten sie individuell charakterisierende, optisch erkennbare Merkmale aufweisen. Die Kameraanordnung kann hierbei dazu konfiguriert sein, die optisch erkennbaren Merkmale durch Auswertung der mit ihr aufgenommenen Bilder zu erkennen und darauf basierend Informationen über eine jeweilige Komponente bereitzustellen.

Anders ausgedrückt kann auch die Ultraschallschweißeinrichtung selbst modular aufgebaut sein, sodass Komponenten wie beispielsweise ihre Sonotrode, ihr Amboss, ihr Touchierelement, ihr Seitenschieber und/oder andere Komponenten einzeln ausgetauscht werden können. Hierdurch können beispielsweise verschlissene Komponenten ersetzt oder Komponenten mit bestimmten Eigenschaften durch Komponenten mit leicht anderen Eigenschaften ersetzt werden, um beispielsweise verschiedenartige Fügepartner geeignet verschweißen zu können.

Allerdings muss dabei sichergestellt sein, dass immer geeignete Komponenten in der Ultraschallschweißeinrichtung eingebaut sind. Beispielsweise beim Tausch von Komponenten kann es aufgrund von Verwechslungen zu einer fehlerhaften Bestückung der Ultraschallschweißeinrichtung mit ungeeigneten Komponenten kommen.

Um dies zu vermeiden bzw. erkennbar zu machen, können die Komponenten individuell markiert werden. Insbesondere können Komponenten mit sie charakterisierenden Merkmalen markiert werden, die optisch erkennbar sein sollen. Beispielsweise können solche charakterisierenden Merkmale bestimmte optisch erkennbare Formen wie zum Beispiel Kanten oder strukturierte Oberflächen an der jeweiligen Komponente sein. Alternativ können Markierungen auch in Form von Codes, beispielsweise einem Strichcode oder einem QR-Code, an Oberflächen der Komponenten bereitgestellt werden.

Die Kameraanordnung sollte in diesem Fall diese Merkmale in den von ihr aufgenommenen Bildern beispielsweise durch Bildanalyse erkennen. Beispielsweise kann die Kameraanordnung dann die erkannten Merkmale mit zuvor in einer Datenbank abgespeicherten Merkmalen vergleichen. Daraufhin kann die Kameraanordnung entsprechende Informationen über die jeweilige, von diesen Merkmalen charakterisierte Komponente ermitteln und beispielsweise einem Bediener zur Verfügung stellen. Alternativ kann beispielsweise für den Fall, dass anhand der von der Kameraanordnung erkannten Merkmale darauf rückgeschlossen werden kann, dass eine falsche Komponente in der Ultraschallschweißeinrichtung verbaut wurde, ein entsprechender Warnhinweis ausgegeben werden oder sogar die Ultraschallschweißeinrichtung deaktiviert werden.

Es wird darauf hingewiesen, dass mögliche Merkmale und Vorteile von Ausführungsformen der Erfindung hierin teilweise mit Bezug auf eine erfindungsgemäß ausgestaltete Ultraschallschweißeinrichtung und teilweise mit Bezug auf eine Art und Weise, wie diese betrieben oder verwendet werden kann, beschrieben sind. Ein Fachmann wird erkennen, dass die für einzelne Ausführungsformen beschriebenen Merkmale in analoger Weise geeignet auf andere Ausführungsformen übertragen werden können, angepasst werden können und/oder ausgetauscht werden können, um zu weiteren Ausführungsformen der Erfindung und möglicherweise Synergieeffekten zu gelangen.

### KURZE BESCHREIBUNG DER ZEICHNUNGEN

Nachfolgend werden vorteilhafte Ausführungsformen der Erfindung unter Bezugnahme auf die beigefügten Zeichnungen weiter erläutert, wobei weder die Zeichnungen noch die Erläuterungen als die Erfindung in irgendeiner Weise einschränkend auszulegen sind, sondern lediglich die angefügten Ansprüche.
Fig. 1 zeigt eine stark schematisierte Seitenansicht auf eine Ultraschallschweißeinrichtung gemäß einer Ausführungsform der vorliegenden Erfindung.
Fig. 2 zeigt eine perspektivische Ansicht auf einen Teilbereich einer Ultraschallschweißeinrichtung gemäß einer Ausführungsform der vorliegenden Erfindung.
Fig. 3 zeigt eine perspektivische Ansicht eines Ausschnitts einer Ultraschallschweißeinrichtung gemäß einer Ausführungsform der vorliegenden Erfindung mit Blick in deren Kameraanordnung.
Fig. 4 zeigt eine Draufsicht auf den in Fig. 3 dargestellten Ausschnitt.
Fig. 5 veranschaulicht Sichtbereiche von Kameras in einer Kameraanordnung einer Ultraschallschweißeinrichtung gemäß einer Ausführungsform der vorliegenden Erfindung.
Fig. 6 veranschaulicht einen modularen Aufbau einer Kameraanordnung einer Ultraschallschweißeinrichtung gemäß einer Ausführungsform der vorliegenden Erfindung.

Die Figuren sind lediglich schematisch und nicht maßstabsgetreu. Gleiche Bezugszeichen bezeichnen in den verschiedenen Zeichnungen gleiche bzw. gleichwirkende Merkmale.

### BESCHREIBUNG VON VORTEILHAFTEN AUSFÜHRUNGSFORMEN

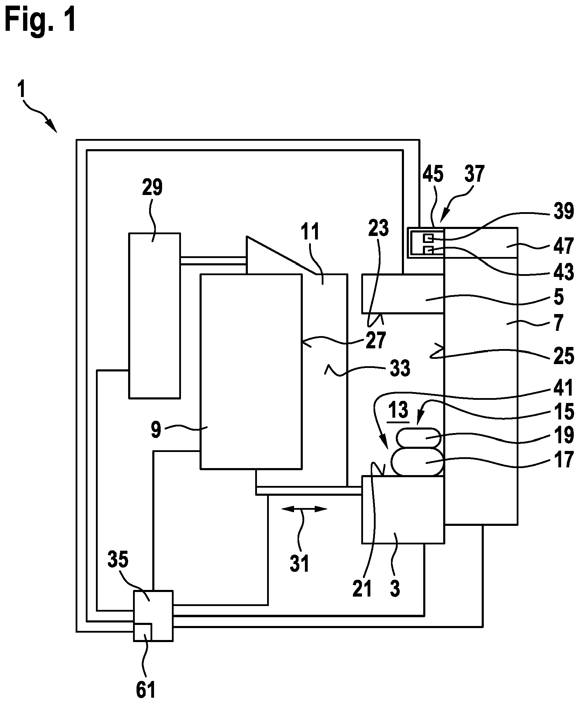

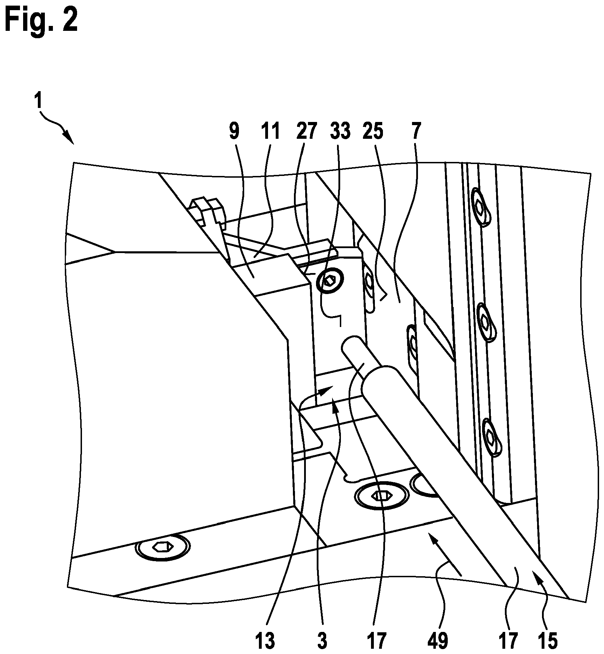

Fig. 1 zeigt in einer stark schematisierten Weise eine Ultraschallschweißeinrichtung 1 gemäß einer Ausführungsform der vorliegenden Erfindung. In Fig. 2 ist eine perspektivische Ansicht auf einen Aufnahmeraum 13 der Ultraschallschweißeinrichtung 1 in einer konkreten Ausgestaltung dargestellt.

Die Ultraschallschweißeinrichtung 1 weist eine Sonotrode 3, einen Amboss 5, ein Touchierelement 7 und einen Seitenschieber 9 auf. Die genannten Komponenten 3, 5, 7, 9 umgeben rahmenartig den Aufnahmeraum 13, in dem Fügepartner 15 wie beispielsweise eine erste Litze 17 eines ersten Kabels und eine zweite Litze 19 eines zweiten Kabels aufgenommen sein können. Der Aufnahmeraum 13 ist dabei unten von einer Oberfläche 21 der Sonotrode 3, oben von einer Oberfläche 23 des Amboss 5, rechts von einer Oberfläche 25 des Touchierelements 7 und links von einer Oberfläche 27 des Seitenschiebers 9 begrenzt. Der von den genannten Oberflächen 21, 23, 25, 27 rahmenartig begrenzte Aufnahmeraum 13 ist somit näherungsweise quaderförmig. Vorne und hinten ist der Aufnahmeraum 13 offen, sodass beispielsweise die zwei Litzen 17, 19 von vorne in einer Einschubrichtung 49 in den Aufnahmeraum 13 eingelegt werden können.

Im dargestellten Beispiel ist der Aufnahmeraum 13 an einer hinteren Seite von einem verlagerbaren Anschlagelement 11 begrenzbar, welches von einer Antriebseinrichtung 29 in einer Verlagerungsrichtung 31 derart hinter den Aufnahmeraum 13 gefahren werden kann, dass die Fügepartner 15 mit ihrer Stirnfläche an einer zu dem Aufnahmeraum 13 gerichteten Oberfläche 33 des Anschlagelements 11 ausgerichtet werden können.

Funktionen und/oder Verlagerungen der verschiedenen aktivierbaren und/oder verlagerbaren Komponenten 3, 5, 7, 9, 11 der Ultraschallschweißeinrichtung 1 können von einer Steuerung 35 gesteuert werden.

In dem Aufnahmeraum 13 sollen die Fügepartner 15 möglichst in einer günstigen Positionierung relativ zueinander angeordnet werden, bevor sie miteinander verschweißt werden. Allerdings ist der Aufnahmeraum 13 verhältnismäßig klein und von außen schwierig einsehbar, sodass ein Bediener der Ultraschallschweißeinrichtung 1 erfahren und besonders geschult sein muss, um die Fügepartner 15 zuverlässig korrekt in dem Aufnahmeraum 13 positionieren zu können.

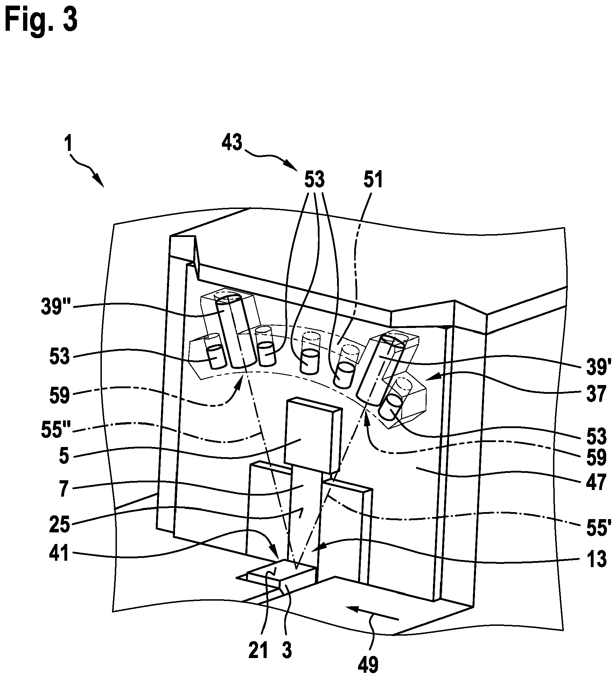

Wie schematisch in Fig. 1 und in mehr Details in den Fign. 3 - 6 dargestellt, ist daher außerhalb des Aufnahmeraums 13 eine Kameraanordnung 37 vorgesehen. Die Kameraanordnung 37 ist dazu ausgelegt, mithilfe zumindest einer Kamera 39 Bilder zumindest von einem Teilbereich 41 des Aufnahmeraums 13 aufzunehmen. Anhand dieser Bilder können dann Verschweißungsbedingungen, welche die sich während eines Schweißvorgangs ergebenden Verschweißungen der Fügepartner 15 beeinflussen, überwacht werden. Um eine Qualität und/oder einen Informationsgehalt dieser Bilder verbessern zu können, kann die Kameraanordnung 37 eine Lichtquelle 43 umfassen, mithilfe derer der abzubildende Teilbereich 41 ausgeleuchtet werden kann. Die Kameraanordnung 37 kann ferner modular aufgebaut sein, wobei Komponenten der Kameraanordnung 37 wie beispielsweise deren Kamera 39, deren Lichtquelle 43 und mögliche andere Komponenten in einem Gehäuse 45 austauschbar gehalten sind und das Gehäuse 45 beispielsweise an einer stationären Struktur 47 der Ultraschallschweißeinrichtung 1 gehalten ist. Funktionen der Kameraanordnung 37 können beispielsweise von der Steuerung 35 gesteuert werden.

In den Fign. 3 - 6 sind mögliche Ausgestaltungen der Kameraanordnung 37 hinsichtlich der darin verwendeten Komponenten, ihrer Geometrie und ihrer Anordnung innerhalb der Ultraschallschweißeinrichtung 1 veranschaulicht. Dabei wurde in den Fign. 3 - 5 das Gehäuse 45 der Kameraanordnung 37 nicht dargestellt und stattdessen die darin aufgenommenen Komponenten dargestellt.

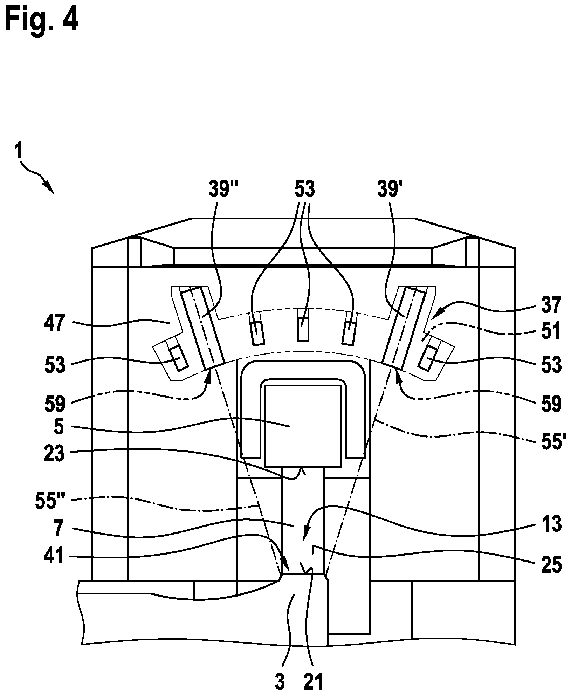

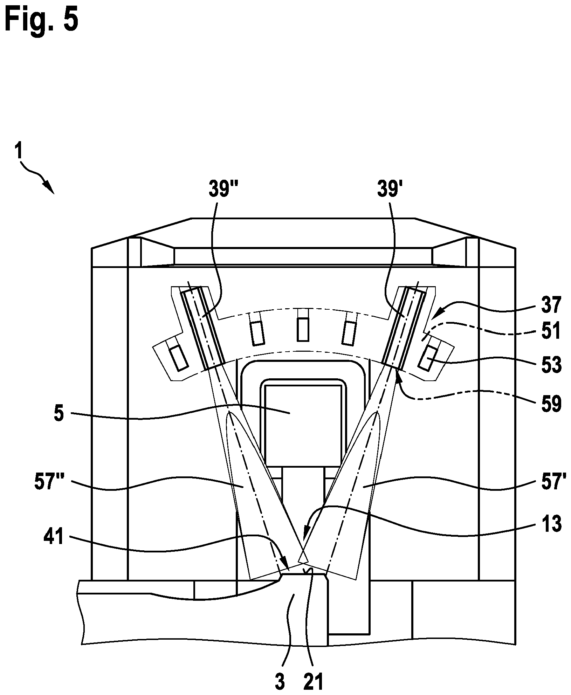

Wie perspektivisch in Fig. 3 und in Draufsicht in den Fign. 4 und 5 dargestellt, umfasst die Kameraanordnung 37 eine längliche, bogenförmige Halteanordnung 51. Die längliche Halteanordnung 51 erstreckt sich dabei parallel zu der Einschubrichtung 49 und ist oberhalb des Amboss 5 angeordnet. An bzw. in der Halteanordnung 51 sind zwei Kameras 39 sowie mehrere Leuchtmittel 53, welche zusammen die Lichtquelle 43 bilden, angeordnet. Die Halteanordnung 51 ist an der stationären Struktur 47 der Ultraschallschweißeinrichtung 1 befestigt.

Eine vordere Kamera 39' ist dabei in Einschubrichtung 49 schräg oberhalb vor dem Aufnahmeraum 13 angeordnet, wohingegen eine hintere Kamera 39` ` schräg oberhalb hinter dem Aufnahmeraum 13 angeordnet ist. Die beiden Kameras 39', 39" sind hierbei mit ihren Sichtachsen 55',55" (siehe Fig.3 und 4) schräg hin zu dem zu beobachtenden Teilbereich 41 des Aufnahmeraums 13 gerichtet, sodass sich ihre kegelförmigen Sichtbereiche 57', 57" (siehe Fig. 5) an dem Teilbereich 41 zumindest überlappen und somit von darin aufgenommenen Fügepartnern 15 (in den Fign. 3 - 5 aus Übersichtlichkeitsgründen nicht dargestellt) Bilder aus unterschiedlichen Richtungen und Winkeln aufnehmen können.

Im dargestellten Beispiel verfügt die Kameraanordnung 37 über fünf Leuchtmittel 53 in Form von LEDs, die räumlich verteilt in Einschubrichtung 49 äquidistant hintereinander an der Halteanordnung 51 angeordnet sind. Die Leuchtmittel 53 dienen dazu, den abzubildenden Teilbereich 41 auszuleuchten. Die Leuchtmittel 53 können eventuell hinsichtlich der von Ihnen emittierten Lichtfarbe unterschiedlich sein oder farblich durchstimmbar sein, sodass das von der Lichtquelle 43 emittierte Licht farblich variiert werden kann.

Die Halteanordnung 51 besteht vorzugsweise aus einem transparenten Material wie beispielsweise einem durchsichtigen Kunststoff. Die Kameras 39 können in der Halteanordnung 51 derart gehalten sein, dass sie mit ihren Sichtbereichen 57 durch Öffnungen 59 in der Halteanordnung 51 und somit unbehindert durch das transparente Material auf den abzubildenden Teilbereich 41 "sehen" können. Die Leuchtmittel 53 können hingegen derart in der Halteanordnung 51 aufgenommen sein, dass das von ihnen emittierte Licht zunächst das transparente Material der Halteanordnung 51 queren muss, bevor es dann hin zu dem Teilbereich 41 gelangen kann. Die Halteanordnung 51 kann dabei derart ausgestaltet sein, dass das transmittierte Licht nicht überwiegend gerichtet auf den Teilbereich 41 trifft, sondern als diffuses Licht. Hierzu können in dem transparenten Material beispielsweise Licht-streuende Partikel aufgenommen sein und/oder Oberflächen dieses Materials können Licht-streuend aufgeraut sein. Hierdurch kann der Teilbereich 41 weitgehend homogen ausgeleuchtet werden und störende lokale Reflexionen an umliegenden Komponenten der Ultraschallschweißeinrichtung 1 können weitgehend vermieden werden.

Die Halteanordnung 51 oder eine zusätzliche, beispielsweise daran anzubringende optische Komponente (nicht dargestellt) kann ferner dazu ausgestaltet sein, dass von der Lichtquelle 43 generierte Licht mit einem Lichtmuster zu versehen. Hierzu können in der Halteanordnung 51 oder der zusätzlichen Komponente stärker und schwächer absorbierende und/oder optisch brechende Bereiche benachbart zueinander angeordnet sein, um in dem transmittierten Licht hellere und dunklere Regionen und/oder Regionen unterschiedlicher Farbe zu erzeugen. Durch Beleuchtung mit einem derart erzeugten Lichtmuster, beispielsweise einem Streifenmuster, können Strukturen innerhalb des abzubildenden Teilbereichs 41 besser erkannt und die aufgenommenen Bilder gegebenenfalls hinsichtlich ihrer räumlichen Anordnung ausgewertet werden.

Zur Auswertung der Bilder kann beispielsweise die Steuerung 35 eine Bildauswerteeinrichtung 61 aufweisen. Diese kann Bilddaten von der Kameraanordnung 37 empfangen und aus den aufgenommenen Bildern beispielsweise durch Bildanalyse Daten erzeugen, mithilfe derer die zu beobachtenden Verschweißungsbedingungen bewertet werden können. Vorzugsweise kann die Bildauswerteeinrichtung 61 die Bilder dabei sogar räumlich auswerten, um Informationen über die Verschweißungsbedingungen ortsabhängig in drei Dimensionen ermitteln zu können.

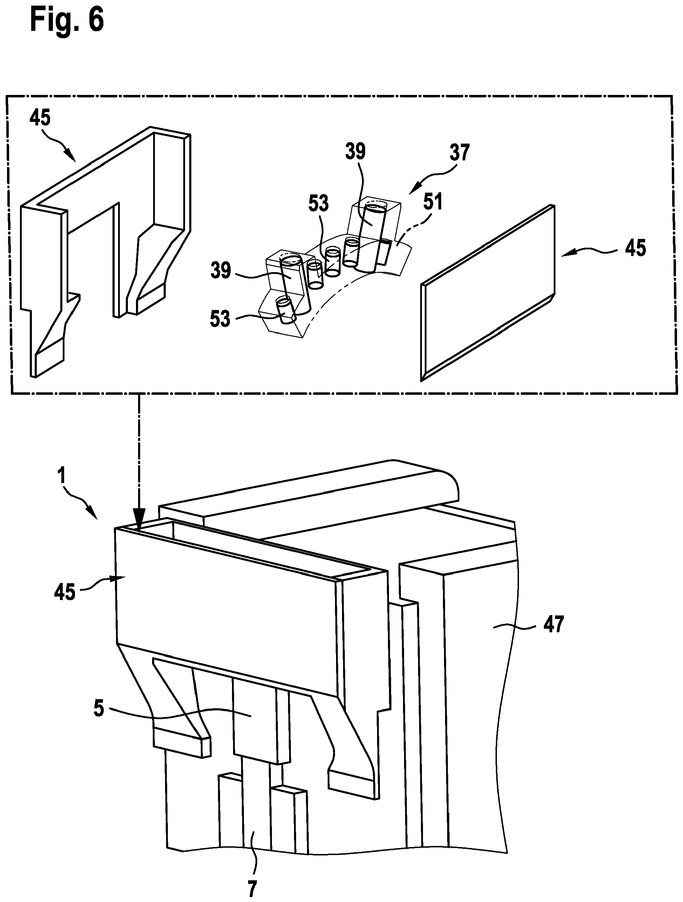

In Fig. 6 ist der modulare Aufbau der Kameraanordnung 37 beispielhaft veranschaulicht. Die Halteanordnung 51 ist dabei innerhalb eines 2-teiligen Gehäuses 45 aufgenommen. Somit kann die Halteanordnung 51 und/oder die darin aufgenommenen Kameras 39 sowie die darin aufgenommenen Leuchtmittel 53 in einfacher Weise ausgetauscht werden, um die Kameraanordnung 37 beispielsweise für modifizierte Beleuchtungsbedingungen anpassen zu können.

Zusammenfassend und teilweise mit anderer Wortwahl können Ausgestaltungen der hierin beschriebenen Ultraschallschweißeinrichtung 1 wie folgt erläutert werden:
Durch die Anordnung der Kameras, die einen integralen Bestandteil der Ultraschallschweißeinrichtung darstellen, kann der Einlegevorgang gut überwacht und der Werker auf mögliche Einlegefehler hingewiesen werden. Des Weiteren lässt die Position es auch zu, bei geschlossenen Werkzeugen (Amboss ausgefahren und unten, Seitenschieber vorgefahren) die beide Seiten von als Fügepartner dienenden Leitungen zu erkennen und auf falsche Position, überstehende Adern, Verschiebungen etc. zu prüfen. Aufgrund der begrenzten Bauraumverhältnisse sind aber die Lichtverhältnisse sehr ungünstig und machen eine zuverlässige Erkennung nur schwer möglich. Zudem ist der Einfluss von Umgebungslicht sehr groß. Durch die im Bogen angeordneten LEDs und den bogenförmigen als Halteanordnung wirkenden Beleuchtungskörper und dessen Material/Oberfläche wird aber eine gleichmäßige Ausleuchtung des als Aufnahmeraum dienenden Schweißraums hergestellt, wodurch oft erst eine sichere Auswertung möglich ist. Der Beleuchtungskörper kann teilweise hohl sein, um ein möglichst diffuses Licht zu erzeugen. Durch den modularen Aufbau, ist es auch einfach möglich, auf unterschiedliche Anforderungen (z.B. andere Werkzeuge, Schweißposition, Lichtverhältnisse ...) zu reagieren und das System einfach zu adaptieren. Zur Referenzierung werden Geometrien (Kanten, Radien ...) an den Werkzeugen oder zusätzliche Markierungen verwendet. Über die Geometrien oder die Markierungen (ggf. Text, Barcode ...) ist zudem zu erkennen, ob die richtigen Werkzeuge montiert wurden. Zwischen Amboss und Seitenschieber eingeklemmte Adern sind über einen Spalt zwischen den beiden Werkzeugen zu erkennen. Durch die Anordnung der Kameras ist es zudem möglich die Leitungen oder den geschweißten Knoten auch 3-dimensional zu vermessen. Diese Messwerte können dann auch als Gut/Schlecht-Kriterium zur Qualitätskontrolle verwendet werden. Durch unterschiedliche Beleuchtungsmittel (Streifenmuster, unterschiedliche Farben etc.) ist es zudem möglich, Oberflächenformen und ggf. Verschmutzungen (z.B. Kupferablagerungen auf den Werkzeugen) zu erkennen und eine notwendige Wartung/Reinigung dem Anwender vorzuschlagen.

Abschließend ist darauf hinzuweisen, dass Begriffe wie "aufweisend", "umfassend", etc. keine anderen Elemente oder Schritte ausschließen und Begriffe wie "eine" oder "ein" keine Vielzahl ausschließen. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

### Bezugszeichenliste

- 1: Ultraschweißeinrichtung
- 3: Sonotrode
- 5: Amboss
- 7: Touchierelement
- 9: Seitenschieber
- 11: erstes Anschlagelement
- 13: Aufnahmeraum
- 15: Fügepartner
- 17: erste Litze
- 19: zweite Litze
- 21: Oberfläche der Sonotrode
- 23: Oberfläche des Amboss
- 25: Oberfläche des Touchierelements
- 27: Oberfläche des Seitenschiebers
- 29: Antriebseinrichtung
- 31: Verlagerungsrichtung des ersten Anschlagelements
- 33: Oberfläche des ersten Anschlagelements
- 35: Steuerung
- 37: Kameraanordnung
- 39: Kamera
- 41: Teilbereich des Aufnahmeraums
- 43: Lichtquelle
- 45: Gehäuse der Kameraanordnung
- 47: stationäre Struktur der Ultraschallschweißeinrichtung
- 49: Einschubrichtung
- 51: Halteanordnung
- 53: Leuchtmittel
- 55: Sichtachsen der Kameras
- 57: Sichtbereiche der Kameras
- 59: Öffnungen
- 61: eine Bildauswerteeinrichtung

## Patentansprüche

1. Ultraschallschweißeinrichtung (1), aufweisend:
eine Sonotrode (3);
einen Amboss (5);
einen Aufnahmeraum (13), in welchem zu verschweißende Fügepartner (15) aufzunehmen sind und der an gegenüberliegenden Seiten von der Sonotrode einerseits und von dem Amboss andererseits begrenzt ist;
eine Kameraanordnung (37) mit wenigstens einer Kamera (39), welche in die Ultraschallschweißeinrichtung integriert ist;
wobei die Kameraanordnung dazu konfiguriert ist, zur optischen Überwachung von Verschweißungsbedingungen, welche Verschweißungen der Fügepartner beeinflussen, Bilder von zumindest einem Teilbereich (41) des Aufnahmeraums aufzunehmen, **dadurch gekennzeichnet, dass**
die Kameraanordnung modular aus mehreren Komponenten einschließlich einer Kamera (39) und einer Lichtquelle (43), welche bedarfsgerecht austauschbar sind, zusammengesetzt ist.

2. Ultraschallschweißeinrichtung (1) nach Anspruch 1,
wobei die Kameraanordnung außerhalb des Aufnahmeraums angeordnet ist und dazu konfiguriert ist, die Bilder von dem Teilbereich des Aufnahmeraums von einer Seite her in Relation zu einer den Aufnahmeraum begrenzenden Oberfläche der Sonotrode aufzunehmen.

3. Ultraschallschweißeinrichtung nach einem der vorangehenden Ansprüche, wobei die Lichtquelle (43) dazu konfiguriert ist, den Teilbereich des Aufnahmeraums, in dem von der Kamera die Bilder aufzunehmen sind, zu beleuchten.

4. Ultraschallschweißeinrichtung nach Anspruch 3,
wobei die Lichtquelle mehrere verteilt angeordnete Leuchtmittel (53) aufweist.

5. Ultraschallschweißeinrichtung nach einem der Ansprüche 3 und 4, wobei die Lichtquelle dazu konfiguriert ist, den Teilbereich des Aufnahmeraums überwiegend mit diffusem Licht zu beleuchten.

6. Ultraschallschweißeinrichtung nach einem der Ansprüche 3 bis 5,
wobei die Lichtquelle dazu konfiguriert ist, den Teilbereich des Aufnahmeraums wählbar mit Licht unterschiedlicher Farben zu beleuchten.

7. Ultraschallschweißeinrichtung (1) nach einem der Ansprüche 3 bis 6,
wobei die Lichtquelle dazu konfiguriert ist, den Teilbereich des Aufnahmeraums mit einem Lichtmuster zu beleuchten.

8. Ultraschallschweißeinrichtung nach einem der vorangehenden Ansprüche, wobei die Kameraanordnung eine zweite Kamera (39") aufweist, welche beabstandet zu einer ersten Kamera (39') der Kameraanordnung s angeordnet ist.

9. Ultraschallschweißeinrichtung nach Anspruch 8,
wobei die erste und die zweite Kamera entlang einer Einschubrichtung (49), in der die Fügepartner in den Aufnahmeraum einzubringen sind, an gegenüberliegenden Seiten des Aufnahmeraums angeordnet sind und dazu konfiguriert sind, Bilder von dem Teilbereich des Aufnahmeraums unter verschiedenen schrägen Winkeln in Relation zu einer den Aufnahmeraum begrenzenden Oberfläche der Sonotrode aufzunehmen.

10. Ultraschallschweißeinrichtung nach einem der vorangehenden Ansprüche, wobei die Kameraanordnung ferner eine Bildauswerteeinrichtung (61) aufweist, welche dazu konfiguriert ist, mit der Kameraanordnung aufgenommene Bilder auszuwerten, um Daten zu erzeugen, mithilfe derer die Verschweißungsbedingungen zu bewerten sind.

11. Ultraschallschweißeinrichtung nach Anspruch 10,
wobei die Bildauswerteeinrichtung dazu konfiguriert ist, die mit der Kameraanordnung aufgenommenen Bilder derart räumlich auszuwerten, dass dabei erzeugte Daten in drei Dimensionen ortsabhängige Informationen über die Verschweißungsbedingungen beinhalten.

12. Ultraschallschweißeinrichtung nach einem der vorangehenden Ansprüche,
wobei Komponenten der Ultraschallschweißeinrichtung austauschbar sind,
wobei jede der Komponenten sie individuell charakterisierende, optisch erkennbare Merkmale aufweist, und
wobei die Kameraanordnung dazu konfiguriert ist, die optisch erkennbaren Merkmale durch Auswertung der mit ihr aufgenommenen Bilder zu erkennen und darauf basierend Informationen über eine jeweilige Komponente bereitzustellen.

## Claims

1. Ultrasonic welding device (1), comprising:
a sonotrode (3);
an anvil (5);
a receiving chamber (13) in which joining partners (15) to be welded are to be received and which is defined on opposing sides by the sonotrode on the one hand and by the anvil on the other hand;
a camera assembly (37) with at least one camera (39) which is integrated in the ultrasonic welding device;
wherein the camera assembly is configured to record images of at least a partial region (41) of the receiving chamber for the optical monitoring of welding conditions which have an impact on welds of the joining partners,
**characterised in that**
the camera assembly is modularly composed of several components including a camera (39) and a light source (43), which are replaceable as necessary.

2. Ultrasonic welding device (1) according to claim 1,
wherein the camera assembly is arranged outside the receiving chamber and is configured to record the images of the partial region of the receiving chamber from one side in relation to a surface of the sonotrode defining the receiving chamber.

3. Ultrasonic welding device according to one of the preceding claims,
wherein the light source (43) is configured to illuminate the partial region of the receiving chamber in which the images are to be recorded by the camera.

4. Ultrasonic welding device according to claim 3,
wherein the light source comprises a plurality of illuminants (53) arranged in a distributed manner.

5. Ultrasonic welding device according to one of claims 3 and 4,
wherein the light source is configured to illuminate the partial region of the receiving chamber predominantly with diffuse light.

6. Ultrasonic welding device according to one of claims 3 to 5,
wherein the light source is configured to selectively illuminate the partial region of the receiving chamber with light of different colors.

7. Ultrasonic welding device (1) according to one of claims 3 to 6,
wherein the light source is configured to illuminate the partial region of the receiving chamber with a light pattern.

8. Ultrasonic welding device according to one of the preceding claims,
wherein the camera assambly comprises a second camera (39") which is arranged spaced apart from the first camera (39') of the camera system.

9. Ultrasonic welding device according to claim 8,
wherein the first and the second cameras are arranged on opposing sides of the receiving chamber along an insertion direction (49) in which the joining partners are to be inserted into the receiving chamber and are configured to record images of the partial region of the receiving chamber at different oblique angles in relation to a surface of the sonotrode defining the receiving chamber.

10. Ultrasonic welding device according to one of the preceding claims,
wherein the camera assembly further comprises an image evaluation device (61) which is configured to evaluate images recorded with the camera assembly in order to generate data with the aid of which the welding conditions are to be assessed.

11. Ultrasonic welding device according to claim 10,
wherein the image evaluation device is configured to spatially evaluate the images recorded with the camera assembly in such a manner that data generated thereby contain information about the welding conditions which is location-dependent in three dimensions.

12. Ultrasonic welding device according to one of the preceding claims,
wherein components of the ultrasonic welding device are replaceable,
wherein each of the components has optically recognizable features which characterize it individually, and
wherein the camera assembly is configured to recognize the optically recognizable features by evaluating the images recorded with the camera assembly and to provide information about a respective component on the basis thereof.

## Revendications

1. Dispositif de soudage par ultrasons (1), présentant :
une sonotrode (3) ;
une enclume (5) ;
un espace de logement (13) dans lequel des partenaires d'assemblage (15) à souder doivent être logés et qui est délimité sur des côtés opposés par la sonotrode d'une part et par l'enclume d'autre part ;
un agencement de caméra (37) comportant au moins une caméra (39), qui est intégré dans le dispositif de soudage par ultrasons ;
dans lequel l'agencement de caméra est configuré pour prendre des images d'au moins une partie (41) de l'espace de logement pour la surveillance optique des conditions de soudage qui ont une influence sur le soudage des partenaires d'assemblage,
**caractérisé en ce que**
l'agencement de caméra est composé de manière modulaire de plusieurs composants, y compris une caméra (39) et une source de lumière (43), qui peuvent être remplacés en fonction des besoins.

2. Dispositif de soudage par ultrasons (1) selon la revendication 1,
dans lequel l'agencement de caméra est disposé à l'extérieur de l'espace de logement et est configuré pour prendre les images de la partie de l'espace de logement depuis un côté par rapport à une surface de la sonotrode délimitant l'espace de logement.

3. Dispositif de soudage par ultrasons selon l'une des revendications précédentes,
dans lequel la source de lumière (43) est configurée pour éclairer la partie de l'espace de logement dans laquelle les images doivent être prises par la caméra.

4. Dispositif de soudage par ultrasons selon la revendication 3,
dans lequel la source de lumière présente plusieurs moyens d'éclairage (53) disposés de manière répartie.

5. Dispositif de soudage par ultrasons selon l'une des revendications 3 et 4,
dans lequel la source de lumière est configurée pour éclairer la partie de l'espace de logement principalement avec une lumière diffuse.

6. Dispositif de soudage par ultrasons selon l'une des revendications 3 à 5,
dans lequel la source de lumière est configurée pour éclairer la partie de l'espace de logement de manière sélective avec une lumière de différentes couleurs.

7. Dispositif de soudage par ultrasons (1) selon l'une des revendications 3 à 6,
dans lequel la source de lumière est configurée pour éclairer la partie de l'espace de logement avec un motif lumineux.

8. Dispositif de soudage par ultrasons selon l'une des revendications précédentes,
dans lequel l'agencement de caméra présente une deuxième caméra (39") qui est disposée à distance d'une première caméra (39') de l'agencement de caméra.

9. Dispositif de soudage par ultrasons selon la revendication 8,
dans lequel la première et la deuxième caméra sont disposées sur des côtés opposés de l'espace de logement le long d'une direction d'insertion (49) dans laquelle les partenaires d'assemblage doivent être insérées dans l'espace de logement, et sont configurées pour prendre des images de la partie de l'espace de logement sous différents angles obliques par rapport à une surface de la sonotrode délimitant l'espace de logement.

10. Dispositif de soudage par ultrasons selon l'une des revendications précédentes,
dans lequel l'agencement de caméra présente en outre un dispositif d'analyse d'image (61) qui est configuré pour analyser les images prises avec l'agencement de caméra afin de générer des données à l'aide desquelles les conditions de soudage doivent être évaluées.

11. Dispositif de soudage par ultrasons selon la revendication 10,
dans lequel le dispositif d'analyse d'images est configuré pour analyser spatialement les images prises avec l'agencement de caméra de telle sorte que les données générées contiennent des informations dépendantes de l'emplacement en trois dimensions sur les conditions de soudage.

12. Dispositif de soudage par ultrasons selon l'une des revendications précédentes,
dans lequel des composants du dispositif de soudage par ultrasons peuvent être remplacés,
dans lequel chacun des composants présente des caractéristiques individuelles optiquement reconnaissables, et
dans lequel l'agencement de caméra est configuré pour reconnaître les caractéristiques optiquement reconnaissables en analysant les images qu'il a prises et pour fournir, sur cette base, des informations sur un composant respectif.
